# EUROPÄISCHE PATENTSCHRIFT

(11) **EP 2 311 653 B1**
(45) Veröffentlichungstag und Bekanntmachung des Hinweises auf die Patenterteilung: **13.03.2013**
(21) Anmeldenummer: 10450156.4
(22) Anmeldetag: 18.10.2010
(51) Int. Cl.: B60B 39/08, B61C 15/10

(54) **Sandaustragungseinrichtung für ein Schienenfahrzeug**
Sanding device for a rail vehicle
Dispositif de sortie de sable pour un véhicule sur rail

(30) Priorität: 16.10.2009 AT 6542009; 05.11.2009 AT 17592009
(43) Veröffentlichungstag der Anmeldung: 20.04.2011
(73) Patentinhaber: MBM Holding GmbH, 3002 Purkersdorf (AT)
(72) Erfinder: Tober, Hubert, 3012 Wolfsgraben Wien (AT); Tober, Stefan, 3012 Wolfsgraben Wien (AT)
(74) Vertreter: Matschnig, Franz

(56) Entgegenhaltungen:
- EP-A1- 1 182 109
- EP-A1- 1 470 981
- DE-U1- 20 217 390
- GB-A- 191 328 725
- US-A- 1 755 643
- US-A- 2 243 243

## Beschreibung

Die Erfindung betrifft einen Saugdüseneinsatz zur Anordnung in einem Vorratsbehälter einer Sandaustragungseinrichtung eines Schienenfahrzeugs, wobei der Saugdüseneinsatz ein Gehäuse mit einem nach unten offenen ersten Hohlraum, an den eine Sandförderleitung anschließbar ist, und an seinem oberen Ende einen Deckelabschnitt aufweist, und der Saugdüseneinsatz parallel zu seiner Mittelachse in Richtung der Sandförderleitung von einem Luftstrom durchströmbar ist, wobei der Luftstrom über eine Druckluftleitung zugeführt wird und hintereinander eine Düse, ein Venturi-Rohr und dann die Sandförderleitung durchströmt, wobei sich der Injektionsraum und das Venturi-Rohr in dem ersten Hohlraum befinden, und in dem Gehäuse weiters zumindest ein Saugkanal vorgesehen ist, der den Vorratsbehälter mit dem Injektionsraum verbindet.

Die Erfindung betrifft weiters ein Verfahren zur Ausbringung eines Streumittels wie Bremssand mit einer Sandaustragungseinrichtung mit einem oben erwähnten Saugdüseneinsatz umfassend die Schritte:
a) Ansaugen eines Streumittels aus einem Vorratsbehälter mittels eines Druckluftstrahls;
b) Verbringen des resultierenden Streumittel-Druckluftgemischs durch eine Sandförderleitung.

Sandaustragungseinrichtungen für Schienenfahrzeuge sind bereits lange bekannt. In der Regel weist eine solche Sandaustragungseinrichtung eine Austragungseinheit und einen Vorratsbehälter auf, der mit Sand befüllt wird und aus dem auf verschiedene Arten der Sand auf die Schiene zu den Rädern des Schienenfahrzeugs befördert wird, um die Traktion des Schienenfahrzeugs beim Anfahren und Abbremsen zu verbessern.

Der Begriff "Sand" bezeichnet im Rahmen dieser Offenbarung gleichermaßen den üblicherweise verwendeten Quarzsand wie auch andere alternative sandartige Mittel (granulare Materialien) zur Reibungserhöhung zwischen Rad und Schiene, wie z.B. Metalloxide. Damit wird der Begriff Sandaustragungseinrichtung im Rahmen dieser Offenbarung auch für solche Einrichtungen verwendet, die die genannten alternativen Streumitteln ausbringen.

In einer weit verbreiteten Variante wird der untere Bereich des Vorratsbehälters trichterförmig ausgeführt. Mittels einem am Boden des trichterförmigen Bereichs angeordneten Saug-oder Druckdüseneinsatz, der als Austragungseinheit fungiert und in der Regel mit Druckluft betrieben wird, wird der Sand aus dem Vorratsbehälter gesaugt und durch Sandförderleitungen vor die Räder des Schienenfahrzeugs transportiert.

Die EP 1470 981 Al zeigt eine solche Vorrichtung, die gattungsbildend für den Oberbegriff des unabhängigen Anspruchs 1 ist. Ähnliche Lösungen zur Ausbringung von reibungserhöhenden Substanzen wie Sand zeigen die EP 1 182109 Al, US 2,243,243, GB 28,725 und US 1,755,643.

Aus verschiedenen Gründen kann es im Verlauf des Betriebs der Sandaustragungseinrichtung zu Verstopfungen der Sandförderleitungen kommen, beispielsweise durch Einwirkung von Feuchtigkeit auf eine Restmenge Sand, die aus einem früheren Sandungsvorgang in der Sandförderleitung verblieben ist, was zu einem Verklumpen oder gar Einfrieren des Sandes in der Sandförderleitung führen kann.

Es ist deshalb notwendig, dass die Sandförderleitungen von Zeit zu Zeit leer, also nur mit Druckluft ohne Beimengung von Sand, durchgeblasen werden. Dazu gibt es eine Reihe von Lösungen, die aber überwiegend durch bewegte Teile das Ansaugen von Sand aus dem Vorratsbehälter zu unterbinden versuchen, um so die Sandförderleitungen nur mit Druckluft freiblasen zu können. Bei längerer Verwendung solcher Vorrichtungen kann es aber durch den Sand zu einer Hemmung dieser bewegten Teile und damit zu Funktionsstörungen und Undichtigkeiten kommen.

DE 20217 390 U1 zeigt eine Lösung, bei der eine einen Saugdüseneinsatz umgehende und in eine Sandleitung mündende Luftzufuhr vorgesehen ist.

Bei der Verwendung von alternativen Streumitteln wie Metalloxiden kann es bei Sandaustragungseinrichtungen gemäß dem Stand der Technik zu Funktionsstörungen kommen: Metalloxide haben ein höheres Gewicht als beispielsweise Quarzsand, daher ist zum Sanden eine größere Luftmenge bzw. ein höherer Luftdruck notwendig, der mit bekannten Vorrichtungen nur schwer erreicht wird.

Es ist daher eine Aufgabe der Erfindung, eine einfache und günstige Vorrichtung bereit zu stellen, mit der auch bei längerer Verwendung die Funktionalität der Sandausbringung mit beliebigen Streumitteln sichergestellt wird und die Sandförderleitungen frei gehalten werden können.

Diese Aufgabe wird mit einem Saugdüseneinsatz der eingangs genannten Art erfindungsgemäß dadurch gelöst, dass der Deckelabschnitt einen zweiten Hohlraum aufweist, der zwischen der Druckluftleitung und der Düse angeordnet ist und dass zwischen diesem zweiten Hohlraum und dem ersten Hohlraum zumindest ein zumindest teilweise verschließbarer Luftkanal vorgesehen ist, wobei der Luftkanaleingang im zweiten Hohlraum liegt und der Luftkanalausgang im ersten Hohlraum liegt und der Durchmesser des Luftkanals ein Vielfaches des Durchmessers der Düse ist, nämlich zumindest ein 4-faches, günstigerweise 5- bis 10-faches. In einer Variante der Erfindung ist der Luftkanal vollständig verschließbar.

Die erfindungsgemäße Lösung ermöglicht das "leere" Durchblasen des Saugdüseneinsatzes und der Sandförderleitungen, bzw. ihr "Freiblasen". Dabei wird der Luftkanal entweder geöffnet oder verschlossen. Das Öffnen und Schließen erfolgt dabei durch eine Vorrichtung, die am Luftkanaleingang, im Luftkanal oder am Luftkanalausgang vorgesehen sein kann.

Um Sicherzustellen, dass die Druckluft bei Bedarf möglichst vollständig den "Bypass" durch den Luftkanal wählt, ist der Durchmesser des Luftkanals ein Vielfaches des Durchmessers der Düse. Dadurch strömt die Druckluft leichter durch den Luftkanal als durch die Düse, es wird verhindert, dass im Injektionsraum ein Unterdruck entsteht, der Bremssand aus dem Vorratsbehälter ansaugt, und das "Freiblasen" erfolgt gänzlich ohne Bremssand.

Weiters ermöglicht die erfindungsgemäße Lösung die Ausbringung von Streumitteln, die schwerer sind als der üblicherweise verwendete Quarzsand. Durch das Vorsehen des Luftkanals steht im ersten Hohlraum immer die volle Menge an Druckluft zur Verfügung. Dabei wird der Luftkanal nicht nur entweder geöffnet oder geschlossen, sondern in seinem Querschnitt variiert, um die durchtretende Luftmenge zu variieren. Dabei ist auch ein Betrieb denkbar, während dem der Luftkanal immer im Zustand eines bestimmten Querschnitts verbleibt - dass beispielsweise 70 Prozent des Luftkanalquerschnitts geöffnet bleiben.

Ist der Luftkanal verschlossen, tritt der Druckluftstrahl durch die Düse in den Injektionsraum, saugt Bremssand aus dem Vorratsbehälter und bläst ein Sand-Druckluftgemisch in die Sandförderleitung. Ist der Luftkanal geöffnet, tritt die Druckluft durch den Luftkanal und nicht, bzw. kaum, durch die Düse. Damit wird der Injektionsraum in Form eines Bypasses umgangen, es wird kein Bremssand aus dem Vorratsbehälter gesaugt und die Sandförderleitung wird "leer" durchgeblasen. Da es dabei keinerlei bewegte Teile im Sandbereich gibt, sind Funktionsstörungen durch den Bremssand praktisch ausgeschlossen. Dadurch lässt sich die ordnungsgemäße Funktion über längere Zeiträume sicherstellen und der Wartungsaufwand minimieren. Durch die einfache Konstruktion sind auch günstige Herstellungskosten garantiert.

Wenn der Luftkanal teilweise geöffnet ist, tritt ein Teil der Druckluft durch die Düse und erzeugt im Injektionsraum einen Unterdruck, der Bremssand (bzw. Streumittel) ansaugt, während die restliche Druckluft durch den Luftkanal strömt und sich im ersten Hohlraum mit dem Druckluft-Sand(bzw. Streumittel)-Gemisch vereinigt. Durch die teilweise Öffnung des Luftkanals wird also die Aufteilung der Druckluft durch Düse und Luftkanal - und damit die Größe des Unterdrucks im Injektionsraum - bei vollem Luftstrom geregelt.

Ein weiterer Vorteil der beschriebenen Austragungsvorrichtung ist somit die sehr weite Verstellbarkeit des Arbeitspunktes und die damit einhergehende genaue Dosierbarkeit des Streuguts. Dies eröffnet völlig neue Einsatzmöglichkeiten im Vergleich zu herkömmlichen Sandungsanlagen.

Es ist möglich, Material auszubringen, das schwerer ist als der üblicherweise verwendete Bremssand. Metalloxide sind aber beispielsweise bis zu drei Mal so schwer als der üblicherweise verwendete Streusand. Bei herkömmlichen Sandaustragungseinrichtungen kann es daher zu Funktionsstörungen kommen, wenn die durch die Düse tretende Druckluft nicht ausreicht, um das Druckluft-Streumittelgemisch durch die Sandförderleitung zu befördern. Da bei dem erfindungsgemäßen Saugdüseneinsatz neben der Luft, die durch die Düse tritt und die Größe des Unterdruckes im Injektionsraum bestimmt auch die abgezweigte Luft nach dem Injektionsraum wieder zugeführt wird, steht ein größeres Luftvolumen zur Verfügung, um das Gemisch auszubringen. Außerdem steht beim erfindungsgemäßen Saugdüseneinsatz, anders als bei herkömmlichen Sandungsanlagen, immer die ungedrosselte Luftmenge für den Streumittelaustrag zur Verfügung.

Die beschriebene Sandungsanlage kann nicht nur reibungserhöhende Streumittel wie Quarzsand oder Metalloxide sicher austragen, sondern es können auch streufähige Schmierstoffe oder Reibungsmodifizierer sehr fein dostiert werden. Dies ermöglicht eine vollständige Kontrolle des Rad-Schiene Reibwerts durch die erfindungsgemäße Austragungseinrichtung. Der Reibwert im Rad-Schiene-Kontakt kann je nach Bedarf erhöht oder reduziert werden.

Der zweite Hohlraum ist vorzugsweise im Deckelabschnitt angeordnet.

Gleichzeitig ist es von Vorteil, wenn der "bypass"-artige Luftkanal im Wesentlichen parallel zur Mittelachse des Saugdüseneinsatzes verläuft. Dadurch ist ein optimales Strömen der Druckluft durch den Luftkanal gewährleistet.

Dabei ist es von Vorteil, wenn der Luftkanal durch eine am Luftkanaleingang angeordnete Absperrvorrichtung teilweise oder vollständig verschließbar ist. Unter "verschließbar" ist aber nicht nur ein diskretes "offen-geschlossen" zu verstehen, sondern auch kontinuierliche Zwischenstufen, die also den Querschnitt des Luftkanals vergrößern bzw. verkleinern (teilweises Verschließen).

Der Fachmann kann betreffend der Ausführung der Absperrvorrichtung aus einer Reihe von bekannten Vorrichtungen wählen.

In einer Ausführungsform der Erfindung wird als Absperrvorrichtung eine Stellschraube verwendet. Mit dieser Stellschraube wird der Querschnitt des Luftkanals geändert, um dadurch die Aufteilung der Druckluft zu regeln - also den Anteil, der durch die Düse tritt, und den Anteil, der durch den Luftkanal strömt, festzulegen. Diese Regelung kann insbesondere über eine händische Einstellung der Stellschraube erfolgen.

In einer weiteren Ausführungsform ist eine Absperrvorrichtung vorgesehen, die durch ein pneumatisches oder elektrisches Signal aktivierbar ist. Signale solcher Art werden in Schienenfahrzeugen häufig verwendet, daher sind die notwendigen Vorrichtungen schon vorhanden und können leicht um die für das Sanden notwendigen Signalwege ergänzt werden.

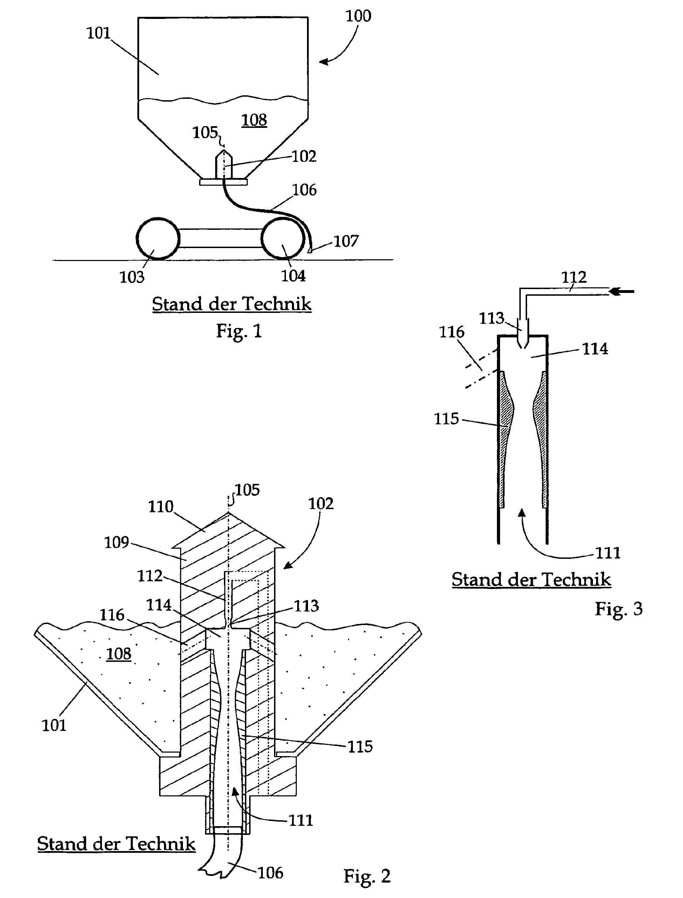

In einer bevorzugten Ausführungsform der Erfindung handelt es sich bei der Absperrvorrichtung um einen mittels eines Elektromagneten bewegbaren Verschlussstempel. Dabei ist der Elektromagnet entweder ein Push- oder Pullmagnet. Unter Push- oder Pullmagnet ist hier die Art und Weise zu verstehen, wie der Elektromagnet bei Aktivierung auf den Verschlussstempel reagiert. Ein Push-Magnet wirkt also demgemäß bei Aktivierung abstoßend auf den Verschlussstempel, während ein Pull-Magnet bei Aktivierung anziehend auf den Verschlussstempel wirkt. Vorteilhafterweise ist der Luftkanalausgang im ersten Hohlraum unterhalb des Venturi-Rohres angeordnet. Der Begriff unterhalb ist dabei aus Sicht eines eingebauten Saugdüseneinsatzes bzw. in Strömungsrichtung des Druckluftstrahls zu verstehen. Siehe dazu beispielsweise Figur 1 oder 2.

Die oben genannte Aufgabe wird weiters mit einem Verfahren der eingangs genannten Art erfindungsgemäß dadurch gelöst, dass die Sandaustragungseinrichtung einen Saugdüseneinsatz der oben genannten Art aufweist und als Streumittel Metalloxidgranulat oder streufähige Schmierstoffe und/oder streufähige Reibungsmodifizierer verwendet wird. Bei diesem Metalloxidgranulat handelt es sich vorteilhafterweise um Aluminiumoxid.

Metalloxide haben den Vorteil, dass für eine ordnungsgemäße Funktion einer Sandaustragungseinrichtung eine sehr viel geringere Menge notwendig ist, als bei der Verwendung von Quarzsand. Bei Aluminiumoxid wird beispielsweise nur ein Zwanzigstel der Menge an Quarzsand benötigt, um die gleiche Wirkung zu erzielen. Dieser Effekt liegt auch darin " begründet, dass Metalloxidgranulat im Gegensatz zu Quarzsand bei Verwendung als Bremsmittel nicht zwischen Schiene und Rad zermahlen wird, sondern seine Form behält und so die Bremswirkung verstärkt.

In einer weiteren Variante der Erfindung werden als Streumittel streufähige Schmierstoffe und/oder Reibungsmodifizierer verwendet.

Im Folgenden wird die Erfindung anhand eines nicht einschränkenden Ausführungsbeispiels, das in der Zeichnung dargestellt ist, näher erläutert. In dieser zeigt schematisch:
- Fig. 1: eine schematische Darstellung einer Sandaustragungseinrichtung entsprechend dem Stand der Technik,
- Fig. 2: eine Schnittansicht eines Saugdüseneinsatzes gemäß dem Stand der Technik,
- Fig. 3: eine schematische Darstellung der von Luft durchströmten Teile eines Saugdüsen- einsatzes,
- Fig. 4: eine schematische Schnittdarstellung eines Saugdüseneinsatzes gemäß der Erfin- dung,
- Fig. 5: eine weitere schematische Schnittdarstellung der Erfindung, und
- Fig. 6: einen Ausschnitt aus einer schematischen Schnittdarstellung einer Variante der Erfindung.

Fig. 1 zeigt eine schematische Darstellung einer Sandaustragungseinrichtung 100 mit Saugdüseneinsatz 102 zur Verwendung an einem Schienenfahrzeug, das allerdings in Fig. 1 lediglich durch die beiden Räder 103, 104 angedeutet ist. Die Darstellung erfolgt dabei nicht naturgetreu sondern soll nur ein Anwendungsgebiet der erfindungsgemäßen Vorrichtung illustrieren. Fig. 1 zeigt den Stand der Technik.

Die Sandaustragungseinrichtung 100 weist einen Vorratsbehälter 101 auf, der mit Bremssand 108 befüllt ist. Der enthaltene Bremssand 108 ist in Fig. 1 nur angedeutet. Wie schon eingangs erwähnt wird hier der Begriff Bremssand 108 als Gattungsbegriff verwendet und umfasst neben dem häufig verwendeten Quarzsand auch andere granulare Streumittel wie beispielsweise Metalloxide (z.B. Aluminiumoxid). Auch die Ausbringung von streufähigen Schmierstoffen oder Reibungsmodifizierern wie Molybdänsulfid (MoS₂) ist möglich. Vorratsbehälter 101 können grundsätzlich belüftet oder auch druckdicht ausgeführt sein; die erfindungsgemäße Vorrichtung kann grundsätzlich für beide Varianten verwendet werden.

Der Vorratsbehälter 101 weist einen konisch zusammenlaufenden Bodenbereich auf, an dessen tiefsten Punkt zumindest ein Saugdüseneinsatz 102 für Sand angeordnet ist. Der Saugdüseneinsatz 102 kann an beliebigen Stellen im Vorratsbehälter 101 angeordnet werden, die besten Ergebnisse lassen sich aber bei Anordnung im Bodenbereich erzielen. Im vorliegenden Ausführungsbeispiel aus Fig. 1 ist der Saugdüseneinsatz 102 derart angeordnet, dass seine Längsachse 105 vertikal angeordnet ist. Grundsätzlich ist es auch möglich, den Saugdüseneinsatz 102 geneigt einzubauen, sodass die Längsachse 105 gegen die Vertikale geneigt ist, beispielsweise um einen Winkel zwischen 0° und 35°. Es können auch mehrere Saugdüseneinsätze 102 vorgesehen sein.

Im beschriebenen Ausführungsbeispiel ist immer von einer vertikalen Anordnung des Saugdüseneinsatzes 102 bzw. der Längsachse 105 die Rede. "Oben" bezieht sich in Folge beim Saugdüseneinsatz 102 immer auf ein oben gemäß der Anordnung in Fig. 1, "unten" ist demgemäß als nahe den Rädern 103,104 zu verstehen.

An den Saugdüseneinsatz 102 ist eine Sandförderleitung 106 angeschlossen, die in eine Sandglocke oder einen Sandschuh 107 übergeht. Über Sandförderleitung 106 und Sandglocke 107 wird Bremssand 108 bzw. Streumittel vor die Räder 103, 104 des Schienenfahrzeugs transportiert. Bei bidirektionalen Fahrzeugen, die also in beide Fahrtrichtungen betrieben werden, kann auch ein zweiter Saugdüseneinsatz 102 mit einer zweiten Sandförderleitung 106 und Sandglocke 107 eingesetzt werden, um in beiden Fahrtrichtungen Sand vor die Räder 103, 104 befördern zu können. Eine solche Variante ist aus Gründen der Übersichtlichkeit in Fig. 1 nicht dargestellt.

Fig. 2 zeigt eine Schnittansicht eines Saugdüseneinsatzes 102 gemäß dem Stand der Technik sowie einen Teil eines Vorratsbehälters 101 mit Bremssand 108. Der Saugdüseneinsatz 102 umfasst ein Gehäuse 109 mit einem Deckelabschnitt 110. Das Gehäuse 109 weist einen nach unten offenen ersten Hohlraum 111 auf, an den eine Sandförderleitung 106 anschließbar ist. Der Saugdüseneinsatz 102 ist parallel zu seiner Mittelachse 105 von einem Druckluftstrom durchströmbar. Dieser Druckluftstrom wird von oben mittels einer Druckluftleitung 112 durch eine Düse 113 in den ersten Hohlraum 111 eingebracht und durchströmt hintereinander einen Injektionsraum 114 und ein Venturi-Rohr 115.

Der Injektionsraum 114 ist über zumindest einen Saugkanal 116 mit dem Vorratsbehälter 101 verbunden. Der Saugkanal 116 ist dabei so geneigt, dass die innere Öffnung im Bereich des Injektionsraums 114 höher gelegen ist als die äußere Öffnung im Vorratsbehälter 101. Dadurch wird verhindert, dass Streumittel ungewollt in den Saugdüseneinsatz 102 gelangt. Das Venturi-Rohr 115 besteht im Wesentlichen aus zwei gegeneinander gerichtete Konen, die an der Stelle ihres geringsten Durchmessers durch einen kurzen Abschnitt eben dieses, konstanten Durchmessers vereint sind.

Durch die Druckverhältnisse, die der Druckluftstrahl beim Durchströmen der genannten Teile bewirkt, wird Bremssand 108 aus dem Vorratsbehälter 101 in den Injektionsraum 114 angesaugt. Der Bremssand 108 wird durch den Druckluftstrahl mitgerissen und ein Sand-Druckluftgemisch durchströmt das Venturi-Rohr 115 und die Sandförderleitung 106 und wird durch den Sandschuh 107 (in Fig. 2 nicht dargestellt) vor die Räder verbracht.

Fig. 3 zeigt noch einmal die Anordnung der Bauteile, die nacheinander von dem Druckluftstrahl durchströmt werden, in schematischer Darstellung. Der Druckluftstrom, symbolisiert durch einen Pfeil, wird mit der Druckluftleitung 112 zur Düse 113 zugeführt und tritt durch die Düse 113 in den ersten Hohlraum 111 (in Fig. 3 fett umrandet) ein. Am oberen Ende des ersten Hohlraums 111 befindet sich der Injektionsraum 114, der durch zumindest einen Saugkanal 116 mit dem Vorratsbehälter 101 (in Fig. 3 nicht dargestellt) verbunden ist. Unterhalb des Injektionsraumes 114 ist das Venturi-Rohr 115 angeordnet.

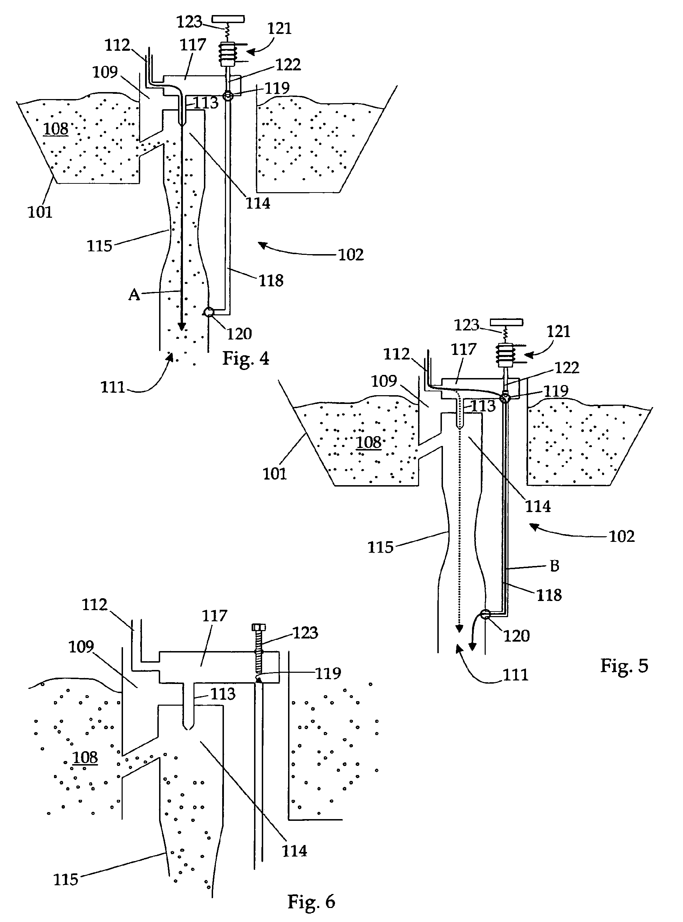

Die Figuren 4, 5 und 6 zeigen den erfindungsgemäßen Saugdüseneinsatz 102, bzw. Ausschnitte davon. Die Form des Saugdüseneinsatzes 102 ist dabei nur angedeutet, dem Fachmann ist eine Vielzahl von Realisierungsmöglichkeiten bekannt. Der Saugdüseneinsatz 102 aus den Figuren 1 und 2 ist dabei eine mögliche Realisierungsvariante. Der erfindungsgemäße Saugdüseneinsatz 102 ist ebenfalls von einem Druckluftstrom durchströmbar, und zwar im Wesentlichen in der Reihenfolge Druckluftleitung 112, Düse 113, Injektionsraum 114 und Venturi-Rohr 115.

Im Gegensatz zum Stand der Technik weist der Saugdüseneinsatz 102 gemäß der Erfindung allerdings einen zweiten Hohlraum 117 auf. Dieser zweite Hohlraum 117 ist zwischen der Druckluftleitung 112 und der Düse 113 angeordnet. Grundsätzlich ist der zweite Hohlraum 117 an geeigneter Stelle im Gehäuse 109 anzuordnen, wird sich aber vorzugsweise im Deckelabschnitt 110 des Gehäuses 109 befinden.

Der zweite Hohlraum 117 ist neben der Düse 113 mittels zumindest eines Luftkanals 118 mit dem ersten Hohlraum 111 verbunden. Grundsätzlich kann eine beliebige Anzahl von Luftkanälen 118 vorgesehen sein, Fig. 4 zeigt aus Gründen der Verständlichkeit eine sehr einfache Variante mit nur einem Luftkanal 118. Der Luftkanal 118 ist dabei vorzugsweise parallel zur Mittelachse 115 (in Figuren 4 und 5 nicht dargestellt) des Saugdüseneinsatzes 102 angeordnet - natürlich sind aber auch andere Lösungen möglich.

Der Durchmesser des Luftkanals 118 ist im Vergleich zur Düse 113 großzügig dimensioniert: Die Nennweite des Luftkanals 118 und des Luftkanaleingangs 119 und -ausgangs 120 beträgt ein Vielfaches der Nennweite der Düse 113, in der Regel zumindest die vierfache Düsennennweite, beispielsweise einen Wert, der um das Fünf- oder (typischerweise) Zehnfache liegt; selbstverständlich sind auch andere Werte aus den Bereichen zwischen den angegeben Zahlenwerten oder auch Werte über 10 möglich.

Der Luftkanaleingang 119 befindet sich im zweiten Hohlraum 117, während sich der Luftkanalausgang 120 im Bereich des ersten Hohlraums 111 befindet. In der dargestellten Ausführungsform ist der Luftkanalausgang 120 unterhalb des Venturi-Rohrs 115 angeordnet. Grundsätzlich kann der Luftkanalausgang 120 aber auch an anderer Stelle als hier dargestellt angeordnet sein, insbesondere noch weiter stromabwärts, jedoch nicht vor dem engsten Querschnitt des Venturirohrs.

Der Luftkanal 118 ist grundsätzlich "verschließbar" ausgeführt, wobei "verschließbar" hier je nach Variante sowohl ein diskretes "offen - geschlossen" umfasst als auch ein kontinuierliches Ändern des Querschnitts des Luftkanals 118 von ganz offen über teilweise verschlossen bis ganz verschlossen.

In einer ersten Variante, die in den Figuren 4 und 5 dargestellt ist, ist der Luftkanal 118 "diskret verschließbar" ausgeführt, umfasst also im Wesentlichen die Stellungen "offen" und "geschlossen".

Das Verschließen kann auf verschiedene Arten erfolgen. Die in den Figuren 4 und 5 gewählte Art mit einem mittels eines Elektromagneten 121 beweglichen Verschlussstempel 122 ist eine von mehreren möglichen Varianten und wird weiter unten näher erklärt. Es sind auch andere Ventilanordnungen denkbar, die an beliebiger Stelle im Luftkanal 118 zwischen Luftkanaleingang 119 und -ausgang 120 angeordnet sind.

Natürlich kann beim Vorsehen mehrerer Luftkanäle (nicht dargestellt) jeder Luftkanal für sich beliebig verschließbar oder auch gänzlich ohne Absperrvorrichtung ausgeführt sein, bzw. beliebige Kombinationen dieser Ausführungsformen.

Die Funktionsweise der erfindungsgemäßen Lösung in der ersten Variante ist wie folgt: Beim Sanden (siehe Fig. 4), wenn also ein Sand-Druckluftgemisch ausgebracht werden soll, bleibt der Luftkanal 118 verschlossen, d.h., der Verschlussstempel 122 verschließt den Luftkanaleingang 119. Die Druckluft bewegt sich dann entlang des mit "A" bezeichneten Weges aus der Druckluftleitung 112 durch den zweiten Hohlraum 117 und die Düse 113 in den ersten Hohlraum 111, wo sie im Injektionsraum 114 Bremssand 108 aus dem Vorratsbehälter 101 ansaugt. Das Sand-Druckluftgemisch tritt dann durch das Venturi-Rohr 115 in die Sandförderleitung 106 (in Fig. 4 nicht dargestellt) aus.

Wenn die Sandförderleitung 106 "leer" freigeblasen werden soll (siehe Fig. 5), wenn also nur Druckluft und nach Möglichkeit kein Bremssand 108 durch die Sandförderleitung 106 geführt werden soll, wird der Luftkanal 118 geöffnet. Durch einen elektrischen Impuls wird der Verschlussstempel 122 angehoben. Da der Durchmesser des Luftkanals 118 um ein Vielfaches größer ist als die Nennweite der Düse 113, strömt die Druckluft hauptsächlich durch den Luftkanal 118. Dieser Strömungsweg ist in Fig. 5 mit "B" bezeichnet. Der ursprüngliche Strömungsweg "A" bei geschlossenem Verschlusstempel 122 ist strichliert angedeutet, da eventuell eine kleine Luftmenge noch diesen Weg nimmt. Da sich der Luftkanalausgang 120 vorzugsweise unterhalb des Venturi-Rohrs 115 befindet, wird die Sandförderleitung 106 freigeblasen, ohne dass neuer Bremssand 108 nachströmt. Durch den Wegfall der Saugwirkung oberhalb des Venturi-Rohrs 115 wird aus dem Sand-Druckluftgemisch beim Sanden ein reiner Luftstrom beim Nachblasen. Der Nachblasvorgang dauert etwa 1 bis 5 Sekunden.

Diese Lösung hat den Vorteil, dass sich keine beweglichen Teile oder Dichtungen im Sandbereich befinden, die bei langer Verwendungsdauer verschleißen könnten. Damit ist das Funktionieren auch bei längerer Verwendung sichergestellt.

In den Figuren 4 und 5 ist eine erste Variante der Erfindung dargestellt, bei der eine Absperrvorrichtung ähnlich einem Magnetventil vorgesehen ist (magnetisch gesteuerte Absperrung). Das bedeutet, dass ein Elektromagnet 121 vorgesehen ist, der mit einer Feder 123 und einem Verschlussstempel 122 verbunden ist. Der Elektromagnet 121 kann dabei als Push- oder Pullmagnet ausgeführt sein. Je nach Ausführungsart wird dann bei Aktivierung des Elektromagneten 121 entweder der Luftkanaleingang 119 freigegeben (Pullmagnet) oder verschlossen (Pushmagnet). Prinzipiell sind beide Lösungen verwendbar, wobei der Verwendung eines Pullmagneten der Vorzug gegeben werden könnte, da so auch bei Ausfall des Elektromagneten 121 die Sandungsfunktion sichergestellt ist. Grundsätzlich sind neben der dargestellten Variante beliebige andere Lösungen möglich, beispielsweise mit pneumatischer Ansteuerung.

Der Verschlusstempel 122 muss so ausgeführt sein, dass eine zuverlässige Absperrung des Luftkanaleingangs 119 durchgeführt werden kann; beispielsweise kann eine Dichtungsvorrichtung vorgesehen sein, um die Funktion sicherzustellen. Wie schon erwähnt, kann das Verschließen des Luftkanals 118 auch auf andere Art erfolgen, beispielsweise durch Anbringen eines Ventils im Luftkanal 118.

Im Gegensatz zur ersten Variante, in der der Luftkanal 118 diskret verschließbar ist (Fig. 4 und 5), zeigt Fig. 6 eine zweite Variante, in der der Luftkanal 118 "kontinuierlich verschließbar" ist. Das bedeutet, dass der Querschnitt des Luftkanals 118 bzw. des Luftkanaleingangs 119 ganz oder zum Teil geöffnet oder verschlossen sein kann.

Fig. 6 zeigt diese zweite Variante, bei der als Absperrvorrichtung eine Stellschraube 123 vorgesehen ist. Die Stellschraube 124 ist so angeordnet, dass sie beliebig tief in den Luftkanal 118 hineingeschraubt werden kann und so den Querschnitt des Luftkanals 118 variiert. Damit sind von ganz geöffnet über teilweise Abdeckung des Luftkanaleingangs 119 bis hin zu ganz verschlossen beliebige kontinuierliche Einstellungen möglich. So kann die Aufteilung der Druckluft zwischen Düse 113 und Luftkanal 118 geregelt werden. Durch diese Aufteilung wird also bei vollem Luftstrom die Größe des Unterdrucks im Injektionsraum 114 ohne jede Drosselung geregelt.

Dank der Erfindung können besonders gut alternative Streumittel wie Metalloxide ausgebracht werden. Metalloxide sind günstige Streumittel, weil sie im Gegensatz zu Bremssand nach der Ausbringung nicht zermahlen werden, sondern ihre Form behalten. Dadurch haben sie eine bessere Bremswirkung als Bremssand und können diese Bremswirkung außerdem länger wahrnehmen, da sie, so sie auf den Schienen verbleiben, bremsverstärkend wirken. Daher ist auch die auszubringende Menge geringer - bei der Verwendung von Aluminiumoxid muss beispielsweise nur ein Zwanzigstel der üblicherweise notwendigen Bremssandmenge ausgebracht werden.

Metalloxide sind aber um ein Vielfaches schwerer als Bremssand. Beispielsweise ist Aluminiumoxid drei Mal so schwer wie Bremssand und bedarf daher eines ausreichenden Luftstroms, um aus dem Vorratsbehälter 101 durch die Sandförderleitung 106 vor die Räder 102, 104 transportiert zu werden.

Dank der Erfindung, bei der neben der Druckluft aus der Düse 113 im ersten Hohlraum 111 auch noch die Luft aus dem Luftkanal 118 zur Verfügung steht, kann nun ein solches Gemisch aus Metalloxid und Druckluft besser ausgebracht werden.

Die sehr weite Verstellbarkeit des Arbeitspunktes der erfindungsgemäßen Austragungseinrichtung und die damit einhergehende genaue Dosierbarkeit des Streuguts erlaubt neue Einsatzmöglichkeiten im Vergleich zu herkömmlichen Sandungsanlagen.

Neben reibungserhöhenden Streumitteln wie Quarzsand oder Metalloxiden können auch streufähige Schmierstoffe oder Reibungsmodifizierer wie Molybdänsulfid (MoS₂) oder Metallspäne (z.B. aus Aluminium) fein dosiert ausgebracht werden. Dies ermöglicht eine vollständige Kontrolle des Rad-Schiene Reibwerts, der je nach Bedarf erhöht oder reduziert werden kann.

### BEZUGSZEICHEN

- 100: Sandaustragungseinrichtung
- 101: Vorratsbehälter
- 102: Saugdüseneinsatz
- 103: Rad
- 104: Rad
- 105: Längsachse
- 106: Sandförderleitung
- 107: Sandschuh
- 108: Bremssand
- 109: Gehäuse
- 110: Deckelabschnitt
- 111: erster Hohlraum
- 112: Druckluftleitung
- 113: Düse
- 114: Injektionsraum
- 115: Venturi-Rohr
- 116: Saugkanal
- 117: Zweiter Hohlraum
- 118: Luftkanal
- 119: Luftkanaleingang
- 120: Luftkanalausgang
- 121: Elektromagnet
- 122: Verschlussstempel
- 123: Feder
- 124: Stellschraube

## Patentansprüche

1. Saugdüseneinsatz (102) zur Anordnung in einem Vorratsbehälter (101) einer Sandaustragungseinrichtung (100) eines Schienenfahrzeugs, wobei der Saugdüseneinsatz (102) ein Gehäuse (109) mit einem nach unten offenen ersten Hohlraum (111), an den eine Sandförderleitung (106) anschließbar ist, und an seinem oberen Ende einen Deckelabschnitt (110) aufweist, und der Saugdüseneinsatz (102) parallel zu seiner Mittelachse (105) in Richtung der Sandförderleitung (106) von einem Luftstrom durchströmbar ist, wobei der Luftstrom über eine Druckluftleitung (112) zugeführt wird und hintereinander
- eine Düse (113),
- einen Injektionsraum (114),
- ein Venturi-Rohr (115) und dann
- die Sandförderleitung (106)
durchströmt, wobei sich der Injektionsraum (114) und das Venturi-Rohr (115) in dem ersten Hohlraum (111) befinden, und in dem Gehäuse (109) weiters zumindest ein Saugkanal (116) vorgesehen ist, der den Vorratsbehälter (101) mit dem Injektionsraum (114) verbindet,
**dadurch gekennzeichnet, dass**
das Gehäuse (109) einen zweiten Hohlraum (117) aufweist, der zwischen der Druckluftleitung (112) und der Düse (113) angeordnet ist, und wobei zwischen diesem zweiten Hohlraum (117) und dem ersten Hohlraum (111) zumindest ein zumindest teilweise verschließbarer Luftkanal (118) vorgesehen ist, der Luftkanaleingang (119) im zweiten Hohlraum (117) liegt und der Luftkanalausgang (120) im ersten Hohlraum (111) liegt und der Durchmesser des Luftkanals (118) ein Vielfaches des Durchmessers der Düse (113) ist, nämlich zumindest ein 4-faches, günstigerweise 5- bis 10-faches.

2. Saugdüseneinsatz nach Anspruch 1, **dadurch gekennzeichnet, dass** der Luftkanal (118) vollständig verschließbar ist.

3. Saugdüseneinsatz nach Anspruch 1 oder 2, **dadurch gekennzeichnet, dass** der zweite Hohlraum (117) im Deckelabschnitt (110) angeordnet ist.

4. Saugdüseneinsatz nach einem der Ansprüche 1 bis 3, **dadurch gekennzeichnet, dass** der Luftkanal (118) im Wesentlichen parallel zur Mittelachse (105) des Saugdüseneinsatzes (102) verläuft.

5. Saugdüseneinsatz nach einem der Ansprüche 1 bis 4, **dadurch gekennzeichnet, dass** der Luftkanal (118) durch eine am Luftkanaleingang (119) angeordnete Absperrvorrichtung teilweise oder vollständig verschließbar ist.

6. Saugdüseneinsatz nach Anspruch 5, **dadurch gekennzeichnet, dass** als Absperrvorrichtung eine Stellschraube (124) verwendet wird.

7. Saugdüseneinsatz nach Anspruch 5 oder 6, **dadurch gekennzeichnet, dass** die Absperrvorrichtung durch ein pneumatisches oder elektrisches Signal aktivierbar ist.

8. Saugdüseneinsatz nach Anspruch 7, **dadurch gekennzeichnet, dass** es sich bei der Absperrvorrichtung um einen mittels eines Elektromagneten (121) bewegbaren Verschlussstempel (122) handelt.

9. Saugdüseneinsatz nach Anspruch 8, **dadurch gekennzeichnet, dass** es sich bei dem Elektromagneten (121) um einen Push- oder Pullmagneten handelt.

10. Saugdüseneinsatz nach einem der Ansprüche 1 bis 9, **dadurch gekennzeichnet, dass** der Luftkanalausgang (120) im ersten Hohlraum (111) unterhalb des Venturi-Rohres (115) angeordnet ist.

11. Verfahren zur Ausbringung eines Streumittels mit einer Sandaustragungseinrichtung (100), umfassend die Schritte:
a) Ansaugen eines Streumittels aus einem Vorratsbehälter (101) mittels eines Druckluftstrahls; und
b) Verbringen des resultierenden Streumittel-Druckluftgemischs durch eine Sandförderleitung (106)
**dadurch gekennzeichnet, dass** die Sandaustragungseinrichtung einen Saugdüseneinsatz gemäß einem der Ansprüche 1 bis 10 aufweist, wobei als Streumittel Metalloxidgranulat oder streufähige Schmierstoffe und/oder streufähige Reibungsmodifizierer verwendet wird.

12. Verfahren nach Anspruch 11, **dadurch gekennzeichnet, dass** als Streumittel Aluminiumoxid verwendet wird.

## Claims

1. A suction nozzle insert (102) for arranging in a storage container (101) of a sand discharge device (100) of a rail vehicle, wherein the suction nozzle insert (102) has a housing (109) with a first hollow chamber (Ill) which is open at the bottom, to which a sand feed pipe (106) can be connected, and a cover section (110) at its top end, an air stream can flow through the suction nozzle insert (102) parallel to its centre axis (105) in the direction of the sand feed pipe (106), wherein the air stream is fed in by a compressed air pipe (112) and flows in succession through
- a nozzle (113)
- an injection chamber (114)
- a venturi pipe (115) and then
- the sand feed pipe (106)
wherein the injection chamber (114) and the venturi pipe (115) are located in a first hollow chamber (111), and furthermore at least one suction channel (116) is provided in the housing (109), which connects the storage container (101) with the injection chamber (114),
**characterised in that**
the housing (109) has a second hollow chamber (117), which is arranged between the compressed air - pipe (112) and the nozzle (113), and wherein at least one at least partially closable air channel (118) is provided between this second hollow chamber (117) and the first hollow chamber (111), the air channel inlet (119) lies in the second hollow chamber (117) and the air channel outlet (120) lies in the first hollow chamber (111) and the diameter of the air channel (118) is several times the diameter of the nozzle (113), namely at least 4 times, ideally 5 to 10 times.

2. The suction nozzle insert according to claim 1, **characterised in that** the air channel (118) is completely closable.

3. The suction nozzle insert according to claim 1 or 2, **characterised in that** the second hollow chamber (117) is arranged in the cover section (110).

4. The suction nozzle insert according to one of the claims 1 to 3, **characterised in that** the air channel (118) runs essentially parallel to the centre axis (105) of the suction nozzle insert (102).

5. The suction nozzle insert according to one of the claims 1 to 4, **characterised in that** the air channel (118) can be partially or completely closed by means of a blocking device arranged at the air channel inlet (119).

6. The suction nozzle insert according to claim 5, **characterised in that** an adjusting screw (124) is used as the blocking device.

7. The suction nozzle insert according to claim 5 or 6, **characterised in that** the blocking device can be activated by a pneumatic or electrical signal.

8. The suction nozzle insert according to claim 7, **characterised in that** the blocking device is a closing die (122) which can be moved by means of a solenoid (121).

9. The suction nozzle insert according to claim 8, **characterised in that** the solenoid (121) is a push or pull magnet.

10. The suction nozzle insert according to one of the claims 1 to 9, **characterised in that** the air channel outlet (120) is arranged in the first hollow chamber (111) below the venturi pipe (115).

11. A method for discharging a gritting material with a sand discharge device (100), comprising the steps:
a) Suction of a gritting material from a storage container (101) by means of a stream of compressed air; and
b) Transportation of the resulting gritting material/compressed air mixture through a sand feed pipe (106)
**characterised in that** the sand discharge device has a suction nozzle insert according to one of the claims 1 to 10, wherein metal oxide granulate or scattering lubricants and/or friction modifiers are used as the gritting material.

12. A method according to claim 11, **characterised in that** aluminium oxide is used as the gritting material.

## Revendications

1. Insert de buse d'aspiration (102) pour le montage dans une trémie (101) d'un dispositif de sortie de sable (100) d'un véhicule sur rails, l'insert de buse d'aspiration (102) comportant un corps (109) avec une première cavité (111) ouverte vers le bas, à laquelle une conduite d'alimentation en sable (106) est raccordable, et une section de couvercle (110) à son extrémité supérieure, et l'insert de buse d'aspiration (102) étant traversable par un flux d'air parallèle à son axe médian (105) vers la conduite d'alimentation en sable (106), le flux d'air étant amené par une conduite d'air comprimé (112) et traversant successivement
- une buse (113),
- une chambre d'injection (114),
- un tube de Venturi (115) et enfin
- la conduite d'alimentation en sable (106),
la chambre d'injection (114) et le tube de Venturi (115) se situant dans la première cavité (111), et au moins une conduite d'aspiration (116) étant en outre prévue dans le corps (109), laquelle relie la trémie (101) à la chambre d'injection (114),
**caractérisé en ce que**
le corps (109) comporte une deuxième cavité (117) montée entre la conduite d'air comprimé (112) et la buse (113), et au moins une conduite d'air (118) fermable au moins en partie étant prévue entre cette deuxième cavité (117) et la première cavité (111), l'entrée de la conduite d'air (119) se situant dans la deuxième cavité (117) et la sortie de la conduite d'air (120) se trouvant dans la cavité 1 (111) et le diamètre de la conduite d'air (118) étant au moins quatre fois, idéalement cinq à dix fois, plus grand que celui de la buse (113).

2. Insert de buse d'aspiration selon la revendication 1 **caractérisé en ce que** la conduite d'air (118) est entièrement fermable.

3. Insert de buse d'aspiration selon la revendication 1 ou 2 **caractérisé en ce que** la deuxième cavité (117) est montée dans la section de convercle (110).

4. Insert de buse d'aspiration selon l'une des revendications 1 à 3 **caractérisé en ce que** la conduite d'air (118) est pour l'essentiel parallèle à l'axe médian (105) de l'insert de buse d'aspiration (102).

5. Insert de buse d'aspiration selon l'une des revendications 1 à 4 **caractérisé en ce que** la conduite d'air (118) est fermable en partie ou entièrement grâce à un dispositif d'arrêt monté à l'entrée de la conduite d'air (119).

6. Insert de buse d'aspiration selon la revendication 5 **caractérisé en ce qu'**une vis de réglage (124) est utilisée comme dispositif d'arrêt.

7. Insert de buse d'aspiration selon la revendication 5 ou 6 **caractérisé en ce que** le dispositif d'arrêt est activable grâce à un signal pneumatique ou électrique.

8. Insert de buse d'aspiration selon la revendication 7 **caractérisé en ce qu'**il s'agit, pour le dispositif d'arrêt, d'un piston de fermeture (122) réglable à l'aide d'un électroaimant (121).

9. Insert de buse d'aspiration selon la revendication 8 **caractérisé en ce qu'**il s'agit, pour l'électroaimant (121), d'un aimant d'attraction ou de répulsion.

10. Insert de buse d'aspiration selon l'une des revendications 1 à 9 **caractérisé en ce que** la sortie de la conduite d'air (120) est montée dans la première cavité (111), sous le tube de Venturi (115).

11. Procédure d'application d'un produit d'épandage avec un dispositif de sortie de sable (100), comprenant les étapes suivantes :
a) Aspiration d'un produit d'épandage contenu dans une trémie (101) grâce à un jet d'air comprimé, et
b) Passage du mélange produit d'épandage / air comprimé résultant par une conduite d'alimentation en sable (106)
**caractérisée en ce que** le dispositif de sortie de sable comporte un insert de buse d'aspiration selon l'une des revendications 1 à 10, des granulés d'oxydes métalliques ou des lubrifiants et/ou des modificateurs de friction faciles à épandre étant utilisés comme produit d'épandage.

12. Procédure selon la revendication 11 **caractérisée en ce que** l'alumine est utilisée comme produit d'épandage.
